(19) **Europäisches Patentamt European Patent Office Office européen des brevets**

(11) **EP 3 749 981 B1**

(12) **FASCICULE DE BREVET EUROPEEN**

(45) Date de publication et mention de la délivrance du brevet:
**06.03.2024 Bulletin 2024/10**

(21) Numéro de dépôt: **19702287.4**

(22) Date de dépôt: **05.02.2019**

(51) Classification Internationale des Brevets (IPC):
**G01T 1/28** *(2006.01)*    **G01T 1/29** *(2006.01)*

(52) Classification Coopérative des Brevets (CPC):
**G01T 1/28; G01T 1/29**

(86) Numéro de dépôt international:
**PCT/EP2019/052721**

(87) Numéro de publication internationale:
**WO 2019/154785 (15.08.2019 Gazette 2019/33)**

(54) **SYSTEME DE CARACTERISATION D'UN FAISCEAU DE PARTICULES CHARGEES ET MACHINE DE PRODUCTION D'UN FAISCEAU DE PARTICULES CHARGEES COMPRENANT UN TEL SYSTEME**

SYSTEM ZUR CHARAKTERISIERUNG EINES STRAHLS GELADENER TEILCHEN UND MASCHINE ZUR ERZEUGUNG EINES STRAHLS GELADENER TEILCHEN MIT EINEM SOLCHEN SYSTEM

SYSTEM FOR CHARACTERIZING A BEAM OF CHARGED PARTICLES AND MACHINE FOR PRODUCING A BEAM OF CHARGED PARTICLES COMPRISING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2018 FR 1850979**

(43) Date de publication de la demande:
**16.12.2020 Bulletin 2020/51**

(73) Titulaires:
• **École Polytechnique**
  **91120 Palaiseau (FR)**
• **Centre National de la Recherche Scientifique**
  **75016 Paris (FR)**

(72) Inventeurs:
• **BERNARD, Denis**
  **78830 Bonnelles (FR)**
• **BOYER, Bruno**
  **91120 Palaiseau (FR)**
• **MANIGOT, Pascal**
  **91410 Roinville (FR)**
• **THIEBAUX, Christophe**
  **91790 Boissy sous Saint-Yon (FR)**
• **VERDERI, Marc**
  **28000 Chartres (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**US-A- 3 450 879**

• **ABBAS K ET AL: "Laboratory and In-Beam Tests of a Novel Real-Time Beam Monitor for Hadrontherapy", IEEE TRANSACTIONS ON NUCLEAR SCIENCE, IEEE SERVICE CENTER, NEW YORK, NY, US, vol. 52, no. 4, 1 août 2005 (2005-08-01), pages 830-833, XP011137745, ISSN: 0018-9499, DOI: 10.1109/TNS.2005.852620**
• **KOPP S ET AL: "Beam Test of a Segmented Foil SEM Grid", ARXIV.ORG, CORNELL UNIVERSITY LIBRARY, 201 OLIN LIBRARY CORNELL UNIVERSITY ITHACA, NY 14853, 29 juillet 2005 (2005-07-29), XP080202731, DOI: 10.1016/J.NIMA.2005.08.076**
• **ANNE R ET AL: "SECONDARY EMISSION DETECTOR SYSTEM FOR SATURNE II", IEEE TRANSACTIONS ON NUCLEAR SCIENCE,, vol. NS-24, no. 3, 1 June 1977 (1977-06-01), pages 1754-1755, XP001433896,**

EP 3 749 981 B1

## Description

### Domaine de l'invention

L'invention concerne un système de caractérisation d'un faisceau de particules chargées, et une machine de production d'un faisceau de particules chargées comprenant un tel système. Elle est en particulier destinée à la mesure de position, de profil et/ou d'intensité de faisceaux de particules chargées dans le vide, les particules ayant par exemple une énergie cinétique de quelques méga-électrons-volts à plusieurs dizaines de giga-électrons-volts et le faisceau ayant une intensité de l'ordre de la centaine de femto-ampère jusqu'au micro-ampère.

L'invention trouve son application principale dans le domaine de la santé, en particulier dans les équipements de traitement de tumeurs cancéreuses par la mesure et le guidage de faisceaux d'ions thérapeutiques. Elle peut également être utilisée sur les lignes de faisceau de particules chargées des équipements de production d'isotopes radiopharmaceutiques ou encore des équipements de lignes telles qu'utilisées dans la recherche académique dans le domaine nucléaire ou d'irradiation en biologie.

### Etat de la technique

Le traitement des tumeurs cancéreuses fait appel à des méthodes thérapeutiques telles que l'hadronthérapie, ou plus particulièrement la protonthérapie, basées sur l'irradiation des cellules cancéreuses au moyen d'un faisceau de particules chargées, respectivement des ions et des protons. Grâce à leur charge électrique, ces particules sont capables d'acquérir une énergie cinétique par application d'un champ électrique et d'être guidées en faisceau. Le traitement des tumeurs cancéreuses par hadronthérapie et protonthérapie requiert typiquement des particules ayant des énergies cinétiques situées entre 50 MeV par nucléon et 900 MeV par nucléon pour les ions et entre 70 MeV et 250 MeV pour les protons. Cette gamme d'énergie est communément appelée gamme d'énergie thérapeutique.

Par ailleurs, un avantage bien connu de ces méthodes, comparativement aux autres traitements de radiothérapie classiques, est la possibilité d'améliorer l'irradiation des cellules cancéreuses en évitant de dégrader les tissus sains et les organes situés à proximité de la zone à traiter.

Monitorer le faisceau requiert une mesure des propriétés du faisceau, en particulier son intensité, sa position et son profil. Cette mesure est classiquement effectuée au moyen d'un moniteur installé à proximité ou au sein de la machine servant à effectuer le traitement thérapeutique.

En traversant le moniteur, le faisceau subit une dispersion angulaire, c'est-à-dire une déviation par rapport à sa trajectoire initiale, ayant pour conséquence de modifier l'étalement latéral du faisceau à une distance donnée du moniteur. Dans le cas d'un traitement opérant par balayage de la tumeur (*Pencil Beam Scanning* en anglais), la dispersion angulaire doit être suffisamment faible afin de circonscrite le faisceau à un étalement latéral submillimétrique au niveau du patient et être tolérable. Ainsi, si le moniteur est situé à quelques mètres en amont du patient, cela implique donc que l'épaisseur de celui-ci ne doit excéder 15 micromètres équivalent-eau (*Water Equivalent Thickness, WET*), la mesure en micromètre équivalent-eau étant une mesure de la profondeur d'interaction d'un faisceau de particules chargées avec un milieu, par exemple un matériau.

Pour une particule de charge électrique z et de quantité de mouvement p (en MeV/c) traversant une épaisseur x de matière (en cm), la dispersion angulaire (en terme de moyenne quadratique, i.e. *Root Mean Square (RMS)* en anglais) $\theta_0$ (en radians) est approximativement donnée par:

$$\theta_0 \simeq \frac{13,6\,MeV}{\beta \cdot c \cdot p} z \sqrt{\frac{x}{X_0}} \qquad (1)$$

où $X_0$ est la longueur de radiation du milieu traversé, en cm, $\beta$ la vitesse de la particule par rapport à *c*, la vitesse de la lumière. Dans le cas de la protonthérapie et de l'hadronthérapie, les particules étant dans un régime peu relativiste, la dispersion s'écrit comme suit :

$$\theta_0 \simeq K \frac{\sqrt{x}}{E_{kin}} \qquad (2)$$

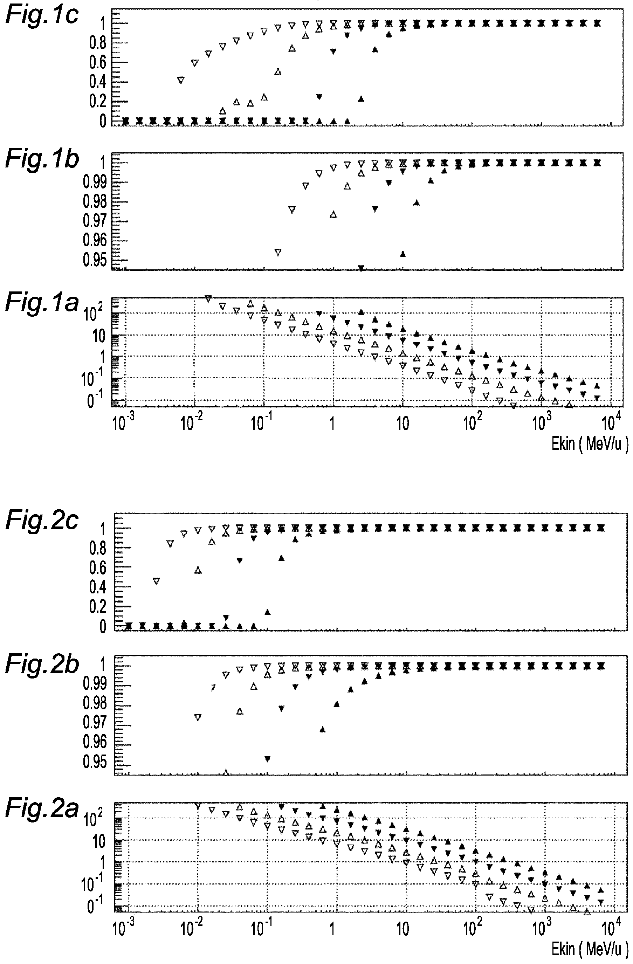

où $E_{kin}$ est l'énergie cinétique de la particule et $K = \frac{13,6\,MeV}{2\sqrt{X_0}} z$ une constante absorbant les autres paramètres. On voit ainsi que pour se conformer à une même dispersion $\theta_0$ passant d'une énergie cinétique donnée à une énergie cinétique 10 fois plus basse, $E_{kin} \rightarrow E_{kin}/10$, il convient d'avoir une épaisseur x 100 fois plus faible, i.e. $x \rightarrow x/100$, du fait que $K \frac{\sqrt{x/100}}{E_{kin}/10} = K \frac{\sqrt{x}/10}{E_{kin}/10} = \theta_0$. Ces critères angulaires qualitatifs sont représentés plus précisément sur les figures 1c à 4c, basées sur une simulation numérique.

En relation avec les équations (1) et (2) ci-dessus, et comme illustré sur la figure 1a, à faisceau d'énergie constante, plus l'épaisseur de matière traversée est faible et plus la dispersion du faisceau est faible, et donc plus la fraction d'énergie transmise est élevée. Par exemple, pour que la contrainte d'étalement latéral de 1 mm, à 2 m du moniteur, (appelée ici de type protonthérapie) soit respectée, il est nécessaire que l'épaisseur de matière traversée par un faisceau de protons à 10 MeV soit

inférieure à 1 μm WET. En revanche, pour un faisceau de protons de 250 MeV, l'épaisseur du moniteur ne doit pas excéder 100 μm WET.

Par ailleurs, les figures 1b et 1c montrent que les pertes en énergie d'un faisceau de protons sont représentées en fonction de l'épaisseur de matière traversée par ledit faisceau sur une plage en énergie comprise entre 1 keV et 10 GeV et pour des épaisseurs de 0,1 μm WET, 1 μm WET, 10 μm WET et 100 μm WET. Aux hautes énergies, la fraction d'énergie transmise est égale à 1, c'est-à-dire que le faisceau de protons n'est quasiment pas perturbé par les épaisseurs de matière traversée, et diminue avec l'énergie du faisceau. Par ailleurs, plus l'épaisseur de matière traversée est faible et plus la diminution de la fraction d'énergie transmise intervient aux plus basses énergies.

L'analyse des figures 2a, 3a et 4a, montre que la contrainte d'étalement latéral de type protonthérapie ne peut être respectée que pour des moniteurs dont l'épaisseur n'excède pas 0,1 μm WET pour un faisceau d'électrons à 10 MeV ou environ 3 μm WET pour un faisceau de particules alphas ou d'ions $^{12}$C à 10 MeV/u. Par ailleurs, les figures 2b, 2c, 3b, 3c, 4b et 4c montrent les pertes en énergie d'un faisceau d'électrons, de particules alphas et d'ions $^{12}$C en fonction de l'épaisseur de matière traversée par ledit faisceau sur une plage en énergie comprise entre 1 keV et 10 GeV (électrons) et 1 keV/u et 10 GeV/u (alphas et ions $^{12}$C) et pour les épaisseurs ci-dessus mentionnées. De manière similaire à ce qui a été observé pour un faisceau de protons, la fraction d'énergie transmise après que de tels faisceaux aient traversé le moniteur est de plus en plus impacté à mesure que l'épaisseur de matière traversée augmente et que l'énergie du faisceau incident diminue.

Pour que l'exigence d'étalement latéral soit respectée, il a donc été mis en évidence par le déposant qu'il est nécessaire que le système de caractérisation du faisceau de particule interceptant le faisceau soit d'épaisseur micrométrique, par exemple inférieure à 15 μm WET. Pour autant, cette exigence n'est pas limitée à la simple utilisation de ces moniteurs en hadronthérapie ou protonthérapie, et il s'agit d'un critère d'évaluation qualitatif pour le monitorage de faisceaux de particules chargées qui pourra être utilisé pour d'autres applications.

Les principales solutions actuellement développées dans l'industrie pour caractériser des faisceaux de particules chargées consistent en des chambres à ionisation. Le document US 2014/0265823 décrit de telles chambres à ionisation. Elles sont typiquement constituées de deux électrodes se faisant face, séparées l'une de l'autre par un volume de gaz. La chambre à ionisation est placée dans le vide de la ligne et au passage du faisceau de particules, des ions sont générés par impact des molécules du gaz avec les particules, en libérant des électrons. Les électrons éjectés sont alors collectés par une cathode, ce qui permet de générer un signal mesurable et de déterminer l'intensité et la forme du faisceau de particules.

Indépendamment de leur performance en termes de dispersion du faisceau, les chambres à ionisation présentent de nombreux inconvénients. En effet, la pression de gaz doit être adaptée à la gamme d'intensité du faisceau, notamment à cause des phénomènes de charge d'espace. De plus, elles nécessitent des moyens supplémentaires situés au sein du dispositif, par exemple des capteurs, pour contrôler les paramètres environnementaux (température, pression, humidité) ce qui limite intrinsèquement la miniaturisation de ces chambres et alourdit les opérations effectuées au moyen desdites chambres. De plus, pour assurer une bonne tenue aux radiations, celles-ci doivent être fréquemment remplacées. En effet, les radiations provoquent une détérioration des parois, et notamment de leurs propriétés de tenue mécanique, altérant leur résistance à la pression exercée par le gaz et subséquemment aux fuites. Par ailleurs, pour les faisceaux de particules ayant des densités de courant élevées, des moyens de correction du signal sont également nécessaires. En effet, en traversant le gaz, un tel faisceau provoque la recombinaison des paires électrons-trous et génère un grand nombre de paires électrons-trous ce qui perturbe le signal, entrainant une erreur de mesure de l'intensité et de la forme du faisceau si le signal n'est pas corrigé.

D'autres solutions alternatives ont également été développées pour monitorer les faisceaux de particules.

Le document US 7,515,681 B2 décrit un système basé sur l'utilisation d'un écran à base de matériau scintillant situé entre la source du faisceau de particules et la zone à irradier. En réponse à un faisceau de protons, le matériau convertit l'énergie déposée sur l'écran en lumière visible. Cette lumière est alors transférée au moyen de dispositifs optiques (e.g lentilles, miroirs, etc.), qui génèrent potentiellement des perturbations sur le signal, jusqu'à un ou plusieurs capteurs-imageurs permettant de fournir instantanément la position et le profil du faisceau. Dans un tel système, la taille du capteur photosensible doit être la plus grande que possible afin de contrebalancer le facteur de rétrécissement requis pour projeter l'image de l'écran sur le(s) capteur(s)-imageur(s), ce qui le rend particulièrement encombrant. De plus, des artéfacts de mesure peuvent apparaître lorsque la distance séparant les capteurs de l'écran n'est pas précisément ajustée, impliquant l'utilisation de moyens optiques complexes. Par ailleurs, l'épaisseur du système n'est pas indiquée, hormis celle du substrat qui est de 100 μm dans un exemple de réalisation.

Shapira et al. (Nuclear instrument and Methods in Physics Research, vol. 454, p. 409-420, 200) proposent un système d'imagerie déportée pour l'hadronthérapie basé sur l'émission d'électrons secondaires. Dans ce système, une feuille inclinée de 45° ou 30° par rapport à l'axe de propagation du faisceau de particules est traversée par ce faisceau, générant des impacts ioniques à l'origine du mécanisme d'émission d'électrons secondaires à la surface de la feuille. Les électrons éjectés de la feuille sont ensuite soumis à une première impulsion provenant d'un champ électrique afin de pointer en direction d'un détecteur imageur, puis, à une deuxième impulsion provenant d'un champ électrique plus modéré de manière à être accélérés vers ledit détecteur. Le détecteur multiplie alors le nombre d'électrons incidents et, en combinaison avec un écran scintillant, le signal détecté et traité afin d'être imagé sous forme d'un motif 2D d'électrons. Un masque est également placé à proximité du détecteur afin de minimiser la dispersion des électrons émis depuis la feuille. Le système est donc relativement complexe. De plus, la résolution du motif obtenu est limitée à celle du détecteur (< 0,25 mm). Le système peut être utilisé à basse intensité comme à haute intensité, cependant à haute intensité, si le taux de comptage seuil du détecteur est atteint le motif obtenu peut être significativement dégradé. De plus, ce système est très sensible à l'environnement électromagnétique induit par les éléments de la machine produisant le faisceau à mesurer.

Vignet et al. (Proceedings of IBIC2013, Oxford, UK, ISBN : 978-3-95450-127-4) proposent des moniteurs à fils métalliques. Ces moniteurs sont également basés sur l'émission d'électrons secondaires lors du passage d'un faisceau de particules, fractionné, sur une feuille émettrice, par exemple en aluminium. Dans ce système, un réseau de fils métalliques séparant la feuille émettrice d'un détecteur permet d'optimiser l'énergie des électrons et permet au moniteur de fonctionner aux hautes intensités sans être endommagé. Le moniteur peut fonctionner à basse (50 keV) comme à moyenne énergie (50 MeV). Cependant, un tel moniteur ne peut pas être conservé dans la ligne de propagation du faisceau lors d'une irradiation car il bloque le passage des faisceaux de faibles énergies. De plus, la géométrie du moniteur, et notamment le placement des aimants servant à contrôler le déplacement des électrons, influence considérablement la dispersion électronique entre la feuille et le détecteur.

Le document US 3450879 propose un détecteur consistant en un diélectrique recouvert sur chacune de ses faces par une électrode métallique. Le diélectrique forme le milieu, non conducteur, d'émission des électrons du détecteur. L'électrode métallique recouvrant le diélectrique, prise en combinaison avec un système de mesure, permet d'imager le lieu dont sont partis les électrons émis par le diélectrique. En cela, l'électrode métallique forme donc une électrode de réception. Ce détecteur ne fonctionne pas selon un principe d'émission d'électrons secondaires.

Le document Badano et al., Laboratory and In-Beam Tests of a Novel Real-Time Beam Monitor for Hadrontherapy, IEEE, vol. 52, 4, 2005.08.01 divulgue un moniteur de faisceau destiné à être utilisé en hadronthérapie. Le moniteur consiste en un support de 0,1 à 0,3 μm d'alumine et une couche de 10 à 20 nm d'aluminium de chaque côté du support en alumine. La couche en aluminium présente de chaque côté de la feuille permet de guider lesdits électrons secondaires émis au moyen de lignes de champ électrique issues de la surface de la feuille. Ne présentant pas de motif, cette couche d'aluminium ne permet pas, seule, d'imager le faisceau. C'est un dispositif de détection indépendant (situé hors axe du faisceau), qui assure l'imagerie.

Kopp et al. (Nuclear Instruments Methods in Physics Research Section A: Accelerator, Spectrometers, Detector and Associated Equipment, vol. 554, issue 1-3, p. 138-146, 2005) proposent des moniteurs à base de feuilles segmentées adaptés à la mesure de l'intensité, de la position et du profil des faisceaux de hautes intensités et de hautes énergies (e.g. 120 GeV). Cinq feuilles segmentées de 5 μm d'épaisseur en Titane sont montées sur un peigne en céramique qui présente des rainures assurant leur alignement et leur maintien mécanique, ce qui représente une épaisseur totale de matière de 25 μm. Un tel système est très bien adapté à la caractérisation de faisceaux de particules aux hautes énergies (quelques GeV), puisqu'avec cette épaisseur de matière il ne bloque pas les radiations. Cependant, en utilisant un tel moniteur aux énergies intermédiaires, le faisceau de particules serait fortement perturbé par ledit moniteur, et une installation à demeure dans la ligne de propagation du faisceau n'est pas envisageable.

En effet, si l'on chiffre l'équivalent-eau du moniteur de Kopp *et al.* à partir de la formule (1) ci-dessous, l'utilisation d'un tel moniteur induirait une dispersion allant bien au-delà des 15 μm WET tolérables. En effet, pour le titane, la longueur de radiation est de 3,56 cm, ce qui représente une longueur de radiation 10 fois moins importante que celle de l'eau 36,08 cm. En conséquence, une épaisseur de 5 μm de titane induit donc la même dispersion que 50 μm d'eau. Chaque feuille présentant deux plans 2 et 4, la traversée du moniteur induirait une dispersion équivalente à 100 μm d'eau. ABBAS K ET AL: "Laboratory and In-Beam Tests of a Novel Real-Time Beam Monitor for Hadrontherapy",IEEE TRANSACTIONS ON NUCLEAR SCIENCE, IEEE SERVICE CENTER, NEW YORK, NY, US, vol. 52, no. 4, 1 août 2005 (2005-08-01), pages 830-833, ISSN: 0018-9499, DOI: 10.1109/TNS.2005.852620 décrit un moniteur de faisceau destiné à être utilisé en hadronthérapie. Le système de détection du moniteur est basé sur l'émission d'électrons secondaires au moyen d'un film d'aluminium submicronique placé directement sur le trajet du faisceau sortant. Ce système permet notamment de réaliser une caractérisation du faisceau d'hadronthérapie. Le moniteur consiste en un film comprenant : - un support de 0,1 à 0,3 μm d'épaisseur d'alumine, - une couche de 10 à 20 nm d'épaisseur d'aluminium de chaque côté du support en alumine.

Les solutions alternatives précitées présentent de nombreux inconvénients. En effet, les moniteurs sont, au choix, trop épais du point de vue des énergies intermédiaires, trop complexes en termes d'installations optique et/ou électromagnétique, inexploitables à demeure dans la ligne de propagation du faisceau, contraignants en termes d'utilisation et limités en termes de plage d'énergie accessible et/ou de dynamique d'intensité.

L'enjeu est donc de réaliser une profilométrie de faisceaux de particules chargées non dégradante pour le faisceau, et ce même pour des faisceaux de faible énergie comme ceux considérés ici.

L'invention permet de surmonter les inconvénients des systèmes précités en proposant un système de caractérisation d'un faisceau de particules chargées, le système comprenant un empilement, ledit empilement comprenant :

- un motif ultramince formé d'un matériau électriquement conducteur ;
- un substrat mince portant le ledit motif ;

l'empilement constitué par le substrat et le motif formant une électrode émettrice, ladite électrode émettrice étant apte à émettre des électrons secondaires à proximité d'une surface dudit motif lorsque ladite électrode émettrice est traversée par le faisceau de particules chargées.

On entend par « substrat mince », un substrat présentant une épaisseur micrométrique ou submicrométrique, c'est-à-dire un substrat aussi mince que possible tout en étant propre à assurer la tenue mécanique du système. Le budget matière du substrat dépend de l'application visée et peut être, par exemple, inférieur à 15 micromètres équivalent-eau, notamment pour caractériser des faisceaux de protonthérapie.

Par ailleurs, on entend par « motif ultramince », un motif aussi mince que possible tout en étant propre à assurer la conduction électrique, par exemple un motif présentant une épaisseur de dimension nanométrique, i.e. d'épaisseur strictement inférieure à 1 $\mu$m.

Ainsi grâce à l'invention, tout en contribuant à permettre la conduction électrique, et donc à établir le profil d'un faisceau de particules chargées, le motif ultramince utilisé dans le système de caractérisation selon l'invention contribue à circonscrire la dispersion du faisceau à un étalement submillimétrique à 2 mètres, c'est-à-dire qu'un faisceau parfait arrivant sur le système a une largeur inférieure à 1 mm, à 2 mètres.

Il permet en outre :

- de réduire les perturbations du faisceau lors de son passage dans le système, c'est-à-dire que la fraction d'énergie transmise après le passage dans le système de caractérisation soit, par exemple, supérieure à 0,95 ; et
- minimiser les échauffements causés par le passage du faisceau, ce qui permet à l'invention de fonctionner à des intensités plus élevées que les systèmes de protonthérapie existants.

De plus, comme l'épaisseur globale du système i.e. de l'électrode émettrice reste faible, cela permet de limiter les perturbations du faisceau, et d'assurer une mesure continue.

Il est encore à noter que contrairement aux systèmes existants, le système de caractérisation selon l'invention présente une structure simple. En effet, le faible étalement latéral, i.e. la faible la dispersion du faisceau au niveau du patient, est conférée par la faible épaisseur du système lui-même. C'est aussi cette faible épaisseur qui permet d'améliorer la précision et la continuité de la mesure lors du monitorage du profil du faisceau.

Par ailleurs, grâce aux propriétés de l'empilement formé, le système de caractérisation selon l'invention a une bonne tenue aux radiations, et n'est pas soumis aux efforts mécaniques, ce qui lui permet d'être tolérant aux doses cumulées et d'avoir une longévité supérieure à celle des systèmes de protonthérapie existants.

L'invention concerne un système de détection selon la revendication 1, une machine de production selon la revendication 15 et une utilisation d'un système de caractérisation selon la revendication 16.

Selon différentes caractéristiques de l'invention qui pourront être prises ensemble ou séparément :

- l'électrode émettrice s'étend selon une distribution sensiblement plane et/ou sensiblement perpendiculaire à la direction de propagation du faisceau ;

- le système est destiné à être situé dans la ligne du faisceau à mesurer ;

- lesdites particules ont une énergie située entre 10 MeV par nucléon et quelques dizaines de GeV, préférentiellement située entre 50 et 900 MeV par nucléon pour des ions, encore plus préférentiellement située entre 70 et 250 MeV pour des protons ;

- le faisceau présente une intensité située entre 100 fA et 1 $\mu$A ;

- ledit empilement comprend au moins une couche d'accroche interposée entre le motif et le substrat de manière à faciliter l'adhésion dudit motif sur le substrat ;

- le substrat est formé d'un matériau thermostable tel qu'un un polymère et/ou une céramique et/ou du MYLAR ® et /ou du PEEK;

- le substrat est formé d'un polyimide tel que le CP1 ® et/ou de Kapton ® ;

- en variante, le substrat est constitué de nitrure de silicium ;

- l'épaisseur du motif est comprise entre 10 nm et 100 nm ;

- ledit substrat est isolant électriquement ;

- ledit motif est formé d'une pluralité de segments conducteurs isolés électriquement les uns des autres ;

- lesdits segments sont faits d'un matériau inoxydable, préférentiellement d'or ;

- lesdits segments sont situés côte à côte ;

- lesdits segments sont reliés à une voie électronique ;

- lesdits segments sont orientés selon une même direction, de manière à échantillonner le faisceau selon un axe donné ;

- lesdits segments sont de même largeur et équidistants ;

- lesdits segments sont découpés en secteurs angulaires, de manière à mesurer le non-centrage et/ou la distribution angulaire du faisceau ;

- en variante, lesdits segments sont découpés en secteurs concentriques, de manière à mesurer le non-centrage et/ou et la distribution radiale du faisceau ;

- en variante, lesdits segments sont découpés en secteurs angulaires et concentriques de manière à réaliser une imagerie du faisceau ;

- ledit système comprend une électrode collectrice ;

- ladite électrode collectrice est soumise à un potentiel supérieur au potentiel de l'électrode émettrice, de manière à collecter les électrons secondaires émis par ladite électrode émettrice ;

- ladite électrode collectrice est située en vis-à-vis de l'électrode émettrice ;

- ladite électrode collectrice n'est pas située en vis-à-vis de l'électrode émettrice mais hors axe du faisceau ;

- ledit système comprend plusieurs électrodes émettrices ;

- ledit système comprend plusieurs électrodes collectrices ;

- chaque électrode collectrice est dédiée à la collecte des électrons secondaires émis par l'une desdites électrodes émettrices ;

- en variante, chaque électrode collectrice est dédiée à la collecte des électrons secondaires émis par plusieurs desdites électrodes émettrices ;

- ledit système est configuré pour que les électrons secondaires émis par l'électrode émettrice soient collectés par des matériaux environnants le système ;

- ledit système comprend un moyen de mesure ;

- ledit moyen de mesure permet de mesurer la quantité d'électrons secondaires émis depuis la surface de la ou des électrodes émettrices ;

- ledit moyen de mesure est relié électriquement à la ou les électrodes émettrices.

Selon un autre aspect, l'invention concerne également une machine de production d'un faisceau de particules chargées comprenant un système tel que décrit précédemment. Ledit système est préférentiellement fixe et à demeure dans ladite machine. On entend par là qu'il n'est pas monté de façon escamotable, bien que cette variante soit possible.

Selon un autre aspect, l'invention concerne également l'utilisation d'un système de caractérisation tel que décrit précédemment pour caractériser un faisceau de particules chargées d'un équipement de traitement des tumeurs cancéreuses, à titre d'exemple.

**Présentation des figures**

D'autres objets, caractéristiques et avantages de l'invention apparaîtront plus clairement dans la description qui suit, faite en référence aux figures annexées, dans lesquelles :

- les figures 1a, 1b et 1c illustrent la largeur d'un faisceau de protons ayant traversé un moniteur à 2 m (fig. 1a) et la perte en énergie du faisceau (figs. 1b, 1c) en fonction de l'énergie du faisceau. L'axe des abscisses est commun aux figures 1a, 1b, et 1c et représente l'énergie cinétique du faisceau (en MeV/u). À la figure 1a, l'axe des ordonnées représente la largeur d'un faisceau de protons ayant traversé un moniteur à 2 m (en millimètres). Aux figures 1b et 1c, l'axe des ordonnées représente la fraction d'énergie transmise. Les flèches pleines orientées vers le haut correspondent à un moniteur ayant une épaisseur de 100 $\mu$m WET. Les flèches pleines orientées vers le bas correspondent à un moniteur ayant une épaisseur de 10 $\mu$m WET. Les flèches vides orientées vers le haut correspondent à un moniteur ayant une épaisseur de 1 $\mu$m WET. Les flèches vides orientées vers le bas correspondent à un moniteur ayant une épaisseur de 0,1 $\mu$m WET ;

- les figures 2a, 2b et 2c illustrent la largeur d'un faisceau d'électrons ayant traversé un moniteur à 2 m (fig. 2a) et la perte en énergie du faisceau (figs. 2b, 2c). Les paramètres représentés sur l'axe des abscisses et l'axe des ordonnées aux figures 2a, 2b et 2c sont identiques à ceux représentés sur les figures 1a, 1b et 1c. Il en est de même pour les symboles correspondant aux différentes épaisseurs de moniteur considérées ;

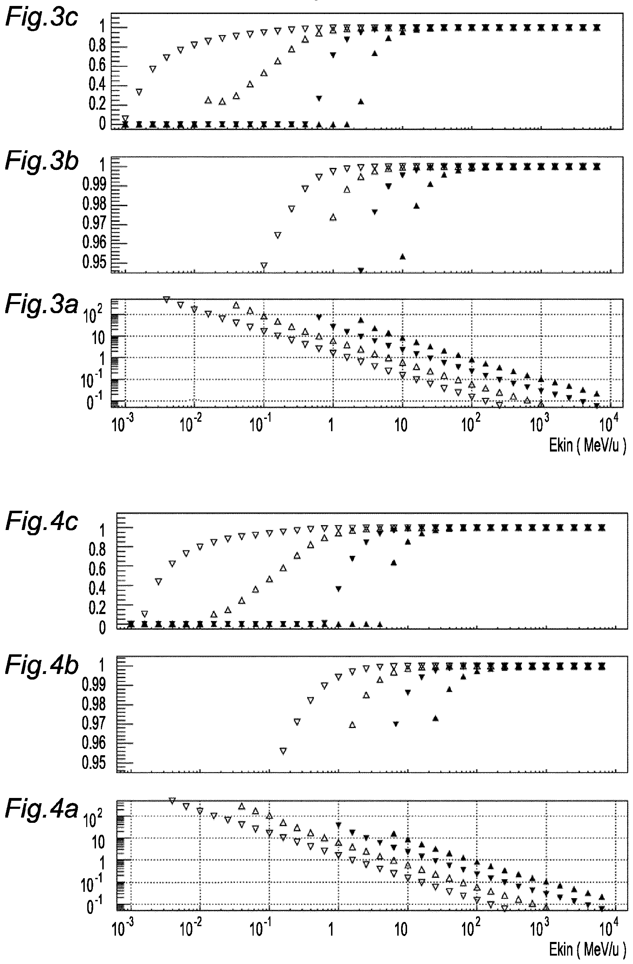

- les figures 3a, 3b et 3c illustrent la largeur d'un faisceau de particules alphas à 2 m (fig. 3a) et la perte en énergie du faisceau ayant traversé un moniteur (figs. 3b, 3c). Les paramètres représentés sur l'axe des abscisses et l'axe des ordonnées aux figures 3a, 3b et 3c sont identiques à ceux représentés sur les figures 1a, 1b et 1c. Il en est de même pour les symboles correspondant aux différentes épaisseurs de moniteur considérées ;

- les figures 4a, 4b et 4c illustrent la largeur d'un faisceau d'ions $^{12}$C ayant traversé un moniteur à 2 m (fig. 4a) et la perte en énergie du faisceau (figs. 4b, 4c). Les paramètres représentés sur l'axe des abscisses et l'axe des ordonnées aux figures 4a, 4b et 4c sont identiques à ceux représentés sur les figures 1a, 1b et 1c. Il en est de même pour les symboles correspondant aux différentes épaisseurs de moniteur considérées;

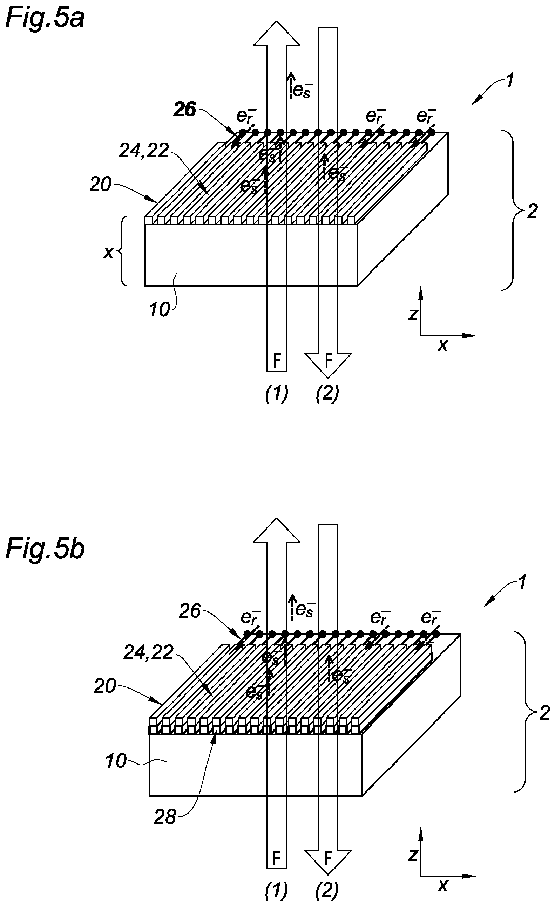

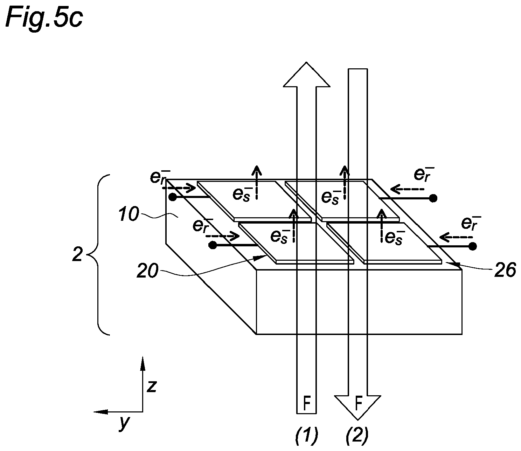

- les figures 5a, 5b et 5c illustrent de manière schématique, en perspective, un système de caractérisation selon un mode de réalisation de l'invention (5a) et selon des variantes de l'invention (figs. 5b et 5c). Les flèches F(1) représentent une émissions vers l'avant et les flèches F(2) représentent une émission vers l'arrière ;

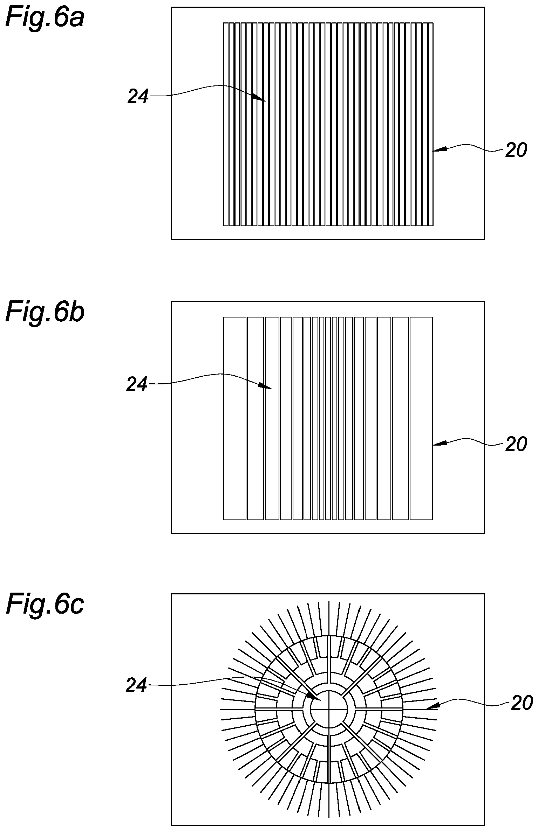

- les figures 6a, 6b et 6c illustrent des motifs selon l'invention ;

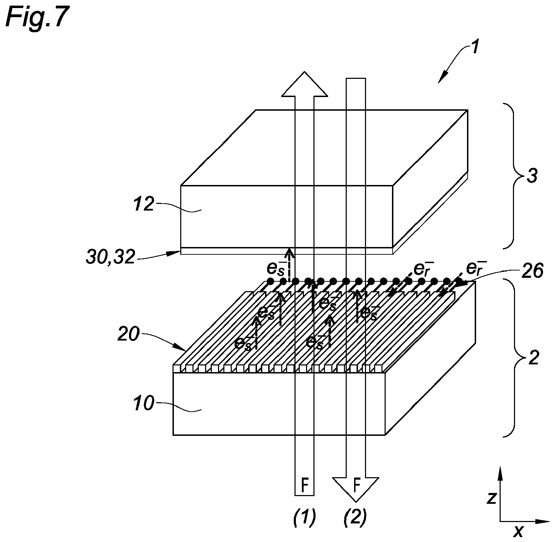

- la figure 7 illustre de manière schématique, en perspective, un système de caractérisation selon un deuxième mode de réalisation de l'invention, le système comprend une électrode collectrice. La flèche F(1) représente une émissions vers l'avant et la flèche F(2) représente une émission vers l'arrière ;

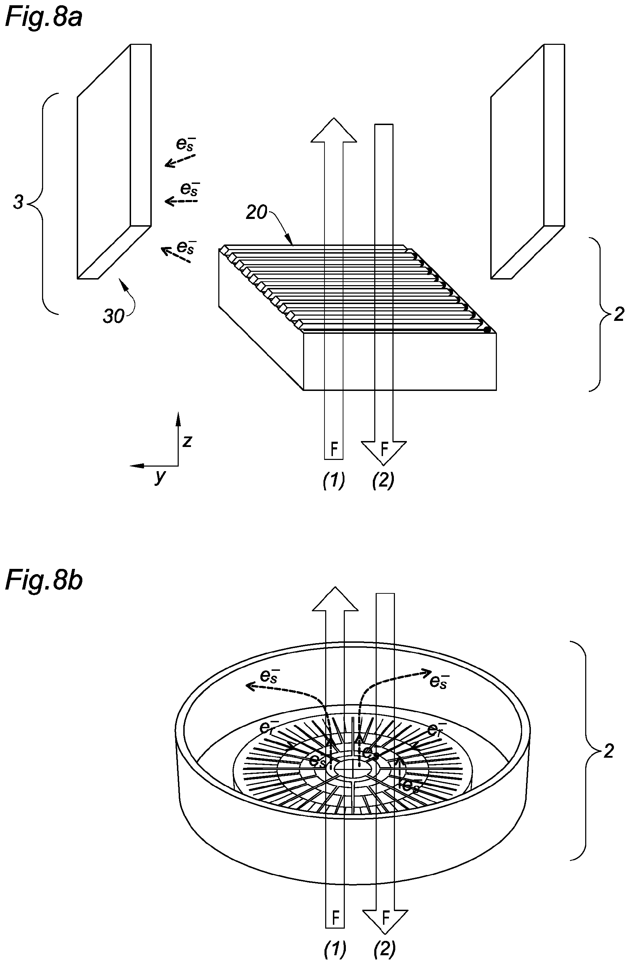

- les figures 8a et 8b illustrent de manière schématique, en perspective, un système de caractérisation selon un troisième mode de réalisation de l'invention avec une ou plusieurs électrodes collectrices parallèles à l'axe du faisceau. Les flèches F(1) représentent une émissions vers l'avant et les flèches F(2) représentent une émission vers l'arrière ;

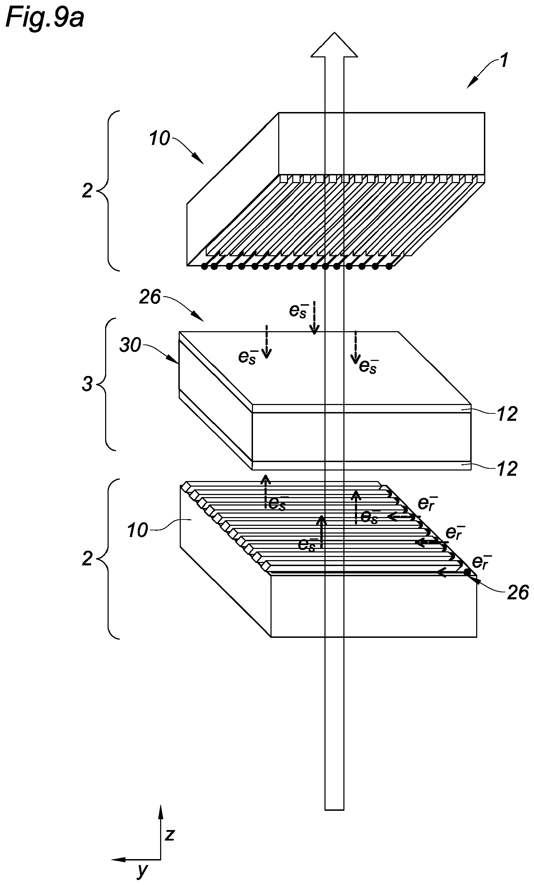

- la figure 9a illustre de manière schématique, en perspective, un système de caractérisation selon un quatrième mode de réalisation de l'invention, le système comprend plusieurs électrodes émettrices ;

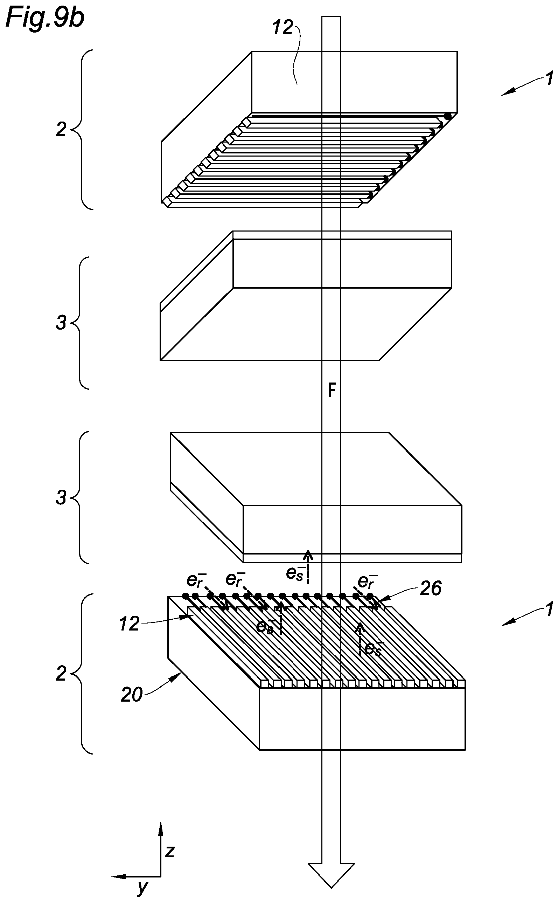

- la figure 9b illustre de manière schématique, en perspective, un système de caractérisation selon une variante du quatrième mode de réalisation de l'invention, le système comprend plusieurs électrodes émettrices et plusieurs électrodes collectrices ;

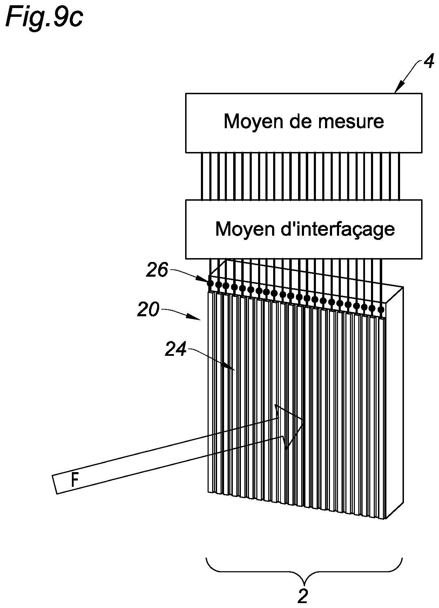

- la figure 9c illustre de manière schématique un circuit électrique de mesure comprenant un système de caractérisation selon l'invention et un moyen de mesure ;

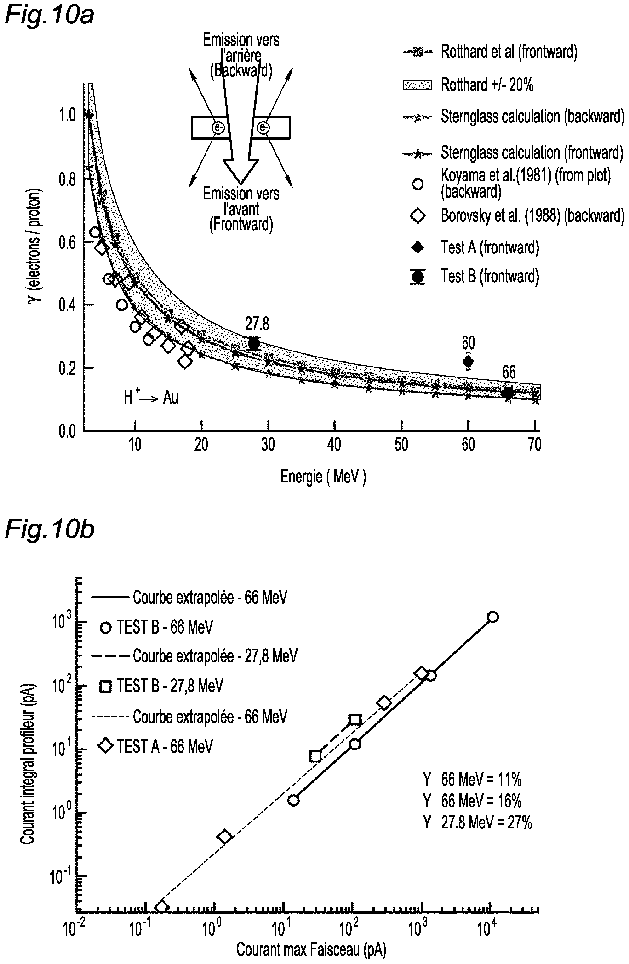

- les figures 10a et 10b illustrent la variation du taux d'électrons secondaires en fonction de l'énergie du faisceau (figure 10a) et de l'intensité du faisceau (figure 10b) selon l'invention et différents systèmes de l'état de l'art ;

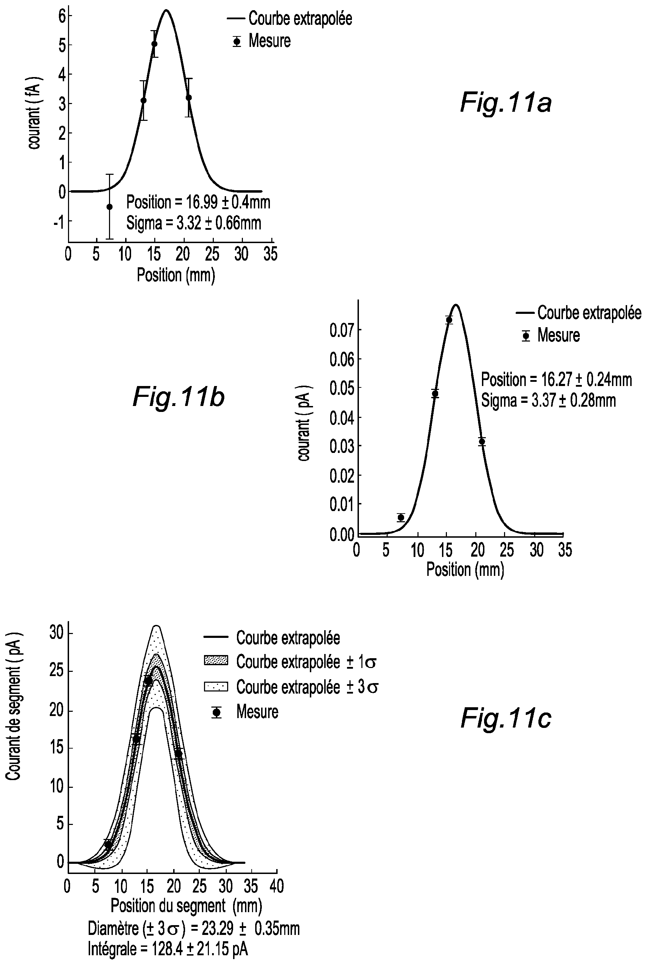

- les figures 11a, 11b et 11c illustrent l'évolution du courant mesuré en fonction de la position des segments, les protons ont une énergie de 60 MeV et l'intensité du faisceau est respectivement de 200 fA, 1 pA et 1 nA selon l'invention.

## Description détaillée

En référence à la figure 5a, l'invention concerne un système de caractérisation 1 d'un faisceau F de particules chargées. Le système 1 est situé dans une ligne de transport des particules, comprenant le faisceau F à mesurer, de sorte que ledit système est traversé par ledit faisceau.

Les particules constituant le faisceau sont des particules subatomiques chargées telles que des protons et/ou des ions et/ou des électrons et/ou des positrons. Elles sont aptes à déposer leur énergie dans le milieu, par exemple un matériau, qu'elles traversent en leur arrachant un ou plusieurs électrons et subséquemment à ioniser directement des atomes dudit milieu.

Aux fins thérapeutiques, et notamment de traitement des tumeurs cancéreuses par protonthérapie et hadronthérapie, les particules sont préférentiellement des protons et/ou des ions. D'autres type de particules chargées peuvent être utilisées seules ou en combinaison avec d'autres particules, et l'invention n'est pas limitée à l'exemple ci-dessus.

La zone à irradier ou à traiter peut être située jusqu'à quelques mètres en aval du système de caractérisation 1 et d'une fenêtre de sortie du faisceau F de particules, c'est-à-dire que ladite zone est située à la sortie de la ligne de transport des particules.

Le système de caractérisation 1 comprend un empilement, ledit empilement comprenant un motif 20 ultramince formé d'un matériau électriquement conducteur et un substrat 10 mince portant le ledit motif 20. Le motif 20 étant ultramince, le substrat 10, notamment par son épaisseur, permet d'assurer un support mécanique dudit motif 20.

L'empilement constitué par le substrat 10 et le motif 20 forme une électrode émettrice 2 s'étendant avantageusement selon une distribution sensiblement plane et/ou sensiblement perpendiculaire à la direction de propagation du faisceau F qui correspond à la direction d'empilement du motif 20 et du substrat 10. Autrement dit, ladite électrode émettrice 2 présente une faible dimension i.e. une faible épaisseur selon un axe Z s'étendant dans la direction de propagation du faisceau F et deux autres dimensions, selon un axe X et un axe Y, adaptées à son insertion et son maintien dans la ligne de transport de particules.

Le système de caractérisation 1 permet le monitorage de faisceaux de particules ayant une énergie cinétique située entre 10 MeV et plusieurs dizaines de GeV.

En effet, en référence aux figures 1a à 4b, aux hautes énergies, i.e. aux énergies supérieures à 500 MeV (ou 500 MeV/u), les systèmes ayant une épaisseur inférieure à 100 $\mu$m WET interceptant le faisceau F entraînent très peu de perturbation sur ledit faisceau, c'est-à-dire que la fraction d'énergie transmise est, par exemple, supérieure ou égale à 0,95 après le passage du faisceau dans le système 1. De plus, à ces énergies et même après son passage à travers un système de 100 $\mu$m WET, le faisceau F de particules chargées ne subit quasiment pas de dispersion puisque sa largeur reste inférieure à 1 mm, à 2 m, voire inférieure à 0,1 mm, à 2 m, pour les très hautes énergies (supérieures ou égales 1 GeV).

En revanche, aux basses énergies, i.e. aux énergies inférieures à 50 MeV (ou 12,5 MeV/u), la faible perturbation du faisceau (fraction d'énergie transmise, par exemple, supérieure ou égale à 0,95) et la faible dispersion du faisceau (largeur du faisceau inférieure à 1 mm, à 2 m) ne sont atteintes que pour des systèmes ayant des épaisseurs très faibles, plus précisément 100 $\mu$m WET pour un faisceau d'électrons, 10 $\mu$m WET pour un faisceau de protons, 1 $\mu$m WET pour un faisceau de particules alphas ou d'ions $^{12}$C.

Le système de caractérisation 1 est particulièrement bien adapté aux faisceaux F de particules ayant une énergie située entre 50 MeV et 900 MeV par nucléon, dite gamme d'énergie intermédiaire. En effet, le système 1 étant de dimension micrométrique ou submicrométrique, et notamment d'épaisseur inférieure à 15 $\mu$m WET, les exigences de faible perturbation et de faible de dispersion du faisceau F sont respectées.

La gamme d'énergie intermédiaire vise ainsi les faisceaux F d'application thérapeutique, i.e. ayant une énergie située entre 70 MeV et 250 MeV pour de protons et 50 MeV par nucléon à 900 MeV par nucléon pour des ions faisant du système de caractérisation 1 une invention particulièrement adaptée à cette application. En effet, comme le faisceau F peut atteindre la zone à traiter en ayant une faible dispersion, il devient alors possible de cibler ladite zone avec une résolution très précise en évitant de dégrader les tissus sains et les organes situés à proximité de ladite zone. On peut alors modifier la profondeur de pénétration du faisceau F dans la zone tumorale avec une grande précision, et donc sans risque pour le patient, en variant uniquement l'énergie du faisceau F.

Selon l'invention, ladite électrode émettrice 2 est apte à émettre des électrons secondaires $e_s^-$ à proximité d'une surface 22 dudit motif 20 lorsque ladite électrode émettrice 2 est traversée par le faisceau de particules chargées. L'émission d'électrons secondaires $e_s^-$ étant proportionnelle au nombre de particules du faisceau ayant traversé le motif 20, ce phénomène est avantageusement linéaire. En effet, en traversant le motif 20, les particules chargées du faisceau F déposent leur énergie sur les atomes dudit motif 20, de sorte que des électrons sont arrachés aux atomes du motif 20 et que lesdits atomes soient ionisés.

Autrement dit, après avoir été traversés par le faisceau de particules F, les atomes situés à la surface 22 du motif 20 se retrouvent dépourvus d'un ou plusieurs électrons sur leur dernière couche électronique et sont donc contraints à récupérer des électrons $e_r^-$ afin de retrouver leur stabilité. Le motif 20 étant formé d'un matériau électriquement conducteur, les électrons $e_r^-$ peuvent migrer depuis le dispositif électronique via au moins une voie électronique 26, puis être mesurés par des dispositifs électroniques au moyen d'une image de la charge ou du courant induit par le passage du faisceau F. Cette image constitue alors le signal mesuré par le système de caractérisation 1.

L'émission d'électrons secondaires mise en jeu lors du passage du faisceau F à travers l'électrode émettrice 2 est un phénomène qui ne s'opère que sur quelques nanomètres, notamment 10 nm, à la surface du motif 20. Autrement dit, il ne concerne que les 10 nm d'épaisseur de matière en partant de la surface 22 dudit motif. Tout en restant ultramince, il est donc préférable que le motif 20 présente une épaisseur d'au moins 10 nm.

Parallèlement, on comprend bien que le substrat 10 n'a d'intérêt que pour supporter mécaniquement le motif 20 et, qu'avantageusement, les électrons secondaires qui sont émis depuis ledit substrat ne participent pas au signal mesuré.

Préférentiellement, le motif 20 a une épaisseur suffisante pour assurer sa conductivité électrique. En effet, suivant la technique de dépôt utilisée et/ou la nature du matériau utilisé, une couche ultramince, i.e. de dimension nanométrique, peut se présenter sous forme « d'îlots » ou « d'agrégats » de matières plus ou moins isolés les uns des autres, du fait de sa faible épaisseur. Ainsi, dans certaines régions de sa surface, une couche ultramince peut présenter une conductivité électrique suffisante, alors que dans d'autres régions la conductivité électrique est largement en-deçà de ce qui est requis.

Ainsi, il est préférable que l'épaisseur du motif 20 soit adaptée afin d'assurer la coalescence de ces îlots ou agrégats de matière, i.e. une couverture complète du substrat 10 par le motif 20, et par conséquent assurer que la conductivité électrique du motif 20 soit non seulement suffisante mais également uniforme sur l'ensemble de la surface 22. L'homme du métier pourra ajuster l'épaisseur du motif 20 en fonction de la technique de dépôt utilisée et/ou du matériau constituant ledit motif. À titre d'exemple, pour un motif 20 fait en or, une épaisseur de 30 nm sera suffisante pour obtenir une conductivité électrique suffisante et permettre l'émission des électrons secondaires $e_s^-$.

Le motif 20 peut être fait de différents matériaux tels que des métaux, des alliages de métaux, des métaux oxydés, des composés organiques ou de tout autre matériau lui permettant d'être suffisamment conducteur. Cependant, il est préférable que le matériau formant le motif 20 soit inoxydable car l'oxydation est une source de contamination qui modifie le taux d'électrons secondaires. En effet, la contamination des couches minces et ultraminces, conductrices ou semi-conductrices, est un phénomène de dégradation courant durant lequel la surface de la couche va absorber des atomes étrangers et principalement des atomes d'oxygène.

Avantageusement, le motif 20 peut être fait d'or. L'or est un matériau à numéro atomique élevé, inoxydable et excellent conducteur. Il est donc particulièrement adapté pour assurer et favoriser le processus d'émission d'électrons secondaires. L'or peut être faiblement adhérent sur les substrats à cause de son caractère inoxydable et la délamination qui en résulte, cependant ses propriétés générales, i.e. sa conductivité et son numéro atomique, en font un matériau privilégié.

En référence à la figure 5b, l'électrode émettrice 2 peut avantageusement comprendre une couche d'accroche 28 interposée entre le motif 20 et le substrat 10. Ladite couche d'accroche 28 permet de faciliter l'adhésion du motif 20 sur le substrat 10, notamment lorsque le matériau formant ledit motif n'est pas suffisamment adhérent. Par exemple, la couche d'accroche 28 peut être faite de chrome (Cr) ou de titane (Ti). Le chrome présente un numéro atomique moyen, mais est oxydable et est très bien adapté pour contenir le délaminage éventuel de l'or, de même que le titane. Le système de caractérisation 1 peut également comprendre une pluralité de couches d'accroches 28 ayant différentes propriétés.

Par ailleurs, l'épaisseur micrométrique du substrat 10 permet qu'un faisceau F de particules chargées induise moins d'échauffement au sein du système de caractérisation 1 en comparaison de l'échauffement qu'il aurait généré dans un système plus épais (par exemple d'épaisseur supérieure à 15 μm WET). En effet, en traversant le système de caractérisation 1, les particules chargées du faisceau F interagissent avec une épaisseur plus faible d'atomes et, déposent donc moins d'énergie dans ce système en comparaison d'un même système identique mais ayant un substrat 10 plus épais.

Ce principe est illustré dans Garnir et al., NIM, 202(1-2), p. 187-192, 1982) qui exposent le résultat de calculs théoriques d'échauffement en fonction de l'intensité sur différents substrats.

Le système de caractérisation 1 ayant une bonne tenue aux échauffements, il permet de mesurer le signal généré par des faisceaux de particules ayant des intensités très élevées. En effet, la caractérisation du faisceau de particules est limitée par sa capacité à résister aux échauffements produits par le passage du faisceau F. Cependant, en pratique, même si cette contrainte est surmontée par l'épaisseur réduite du dispositif, l'intégrité du système n'est assurée que pour des faisceaux ayant des intensités inférieures à 1 μA.

À cette fin, le substrat 10 peut donc être avantageusement formé d'un matériau thermostable. Par « thermostable », on entend que le matériau formant le substrat 10 peut supporter la chaleur induite par le faisceau F de particules pendant une certaine durée, même quand le faisceau présente une intensité élevée.

Préférentiellement, le substrat 10 peut être fait d'un polymère thermostable, c'est-à-dire que ledit polymère peut résister à une chaleur supérieure à 200°C, de préférence 300 °C pendant une certaine durée. Par exemple, ledit polymère peut être du Kapton ®, du Colorless Polyimide 1 ® (CP1) ou du polyetherethercétone (PEEK). Le Kapton ® est un polyimide ayant une grande résistance aux radiations et à la chaleur, de surcroît disponible à des épaisseurs inférieures à 8 μm. De plus, le Kapton ® ne fond pas. Le CP1 qui est également un polyimide présente donc une bonne résistance aux radiations. De plus, il est disponible à une épaisseur de 1,5 μm, bien plus faible que celles auxquelles est disponible le Kapton ®. Le PEEK présente également une grande résistance aux radiations et à la chaleur, en plus d'être résistant aux attaques chimiques. Il est avantageusement disponible à des épaisseurs inférieures à 6 μm.

D'autres polymères plus classiques tels que le Polytéréphtalate d'éthylène (PET), e.g. le Mylar ®, peuvent être utilisés. Ces matériaux sont disponibles à de très faibles épaisseurs, par exemple 0,5 μm, mais sont difficiles à manipuler à de telle épaisseurs. Par ailleurs, ils présentent une faible température de transition vitreuse i.e. 70°C, c'est-à-dire qu'au-delà de cette température le PET passe d'un état caoutchouteux à un état solide et ses propriétés changent, ce qui le rend inadapté à un système soumis à des faisceaux de haute intensité.

Par ailleurs, il est préférable que le matériau formant le substrat ne dégaze pas. En effet, le dégazage est un processus durant lequel un matériau est amené à libérer des molécules sous forme de gaz. Il s'agit d'un processus pouvant se produire pour certains matériaux, en particulier lorsqu'ils sont sous vide. Les matériaux présentés ci-dessous, c'est-à-dire les polymères et céramiques thermostables sont très peu soumises au dégazage.

Encore plus préférentiellement, le substrat 10 peut être fait d'une céramique thermostable telle que le nitrure de silicium ($Si_3N_4$). Le nitrure de silicium présente une très grande résistance aux radiations et à la chaleur et ne fond pas. Il se décompose à des températures supérieures à 1800 °C, c'est-à-dire que ses propriétés changent à cette température. De manière très avantageuse, le nitrure de silicium peut être formé à des épaisseurs de quelques dizaines de nanomètres, même s'il n'est disponible que pour des surfaces très faibles (< 1 cm$^2$). À titre d'exemple, le système 1 peut comprendre une électrode émettrice 2 munie d'un substrat 10 de 100 nm de nitrure de silicium recouvert d'un motif 20 de 50 nm d'or.

Comme le substrat 10 est libre de toute contrainte mécanique, cela permet de limiter l'impact délétère des radiations, et notamment d'éviter la détérioration du système 1 en cas d'exposition à des faisceaux d'intensité trop élevée. En effet, le système de caractérisation 1 étant situé dans la ligne de vide du faisceau F à mesurer, il n'y a aucun effort de contact exercé par le milieu environnant sur ledit substrat 10.

Le système de caractérisation 1 permet de mesurer les caractéristiques des faisceaux de particules de très faibles intensités, par exemple 100 fA. Cette limitation à 100 fA est en réalité une limitation des appareils de mesure. En effet, en dessous du 100 fA, des moyens de mesure très sophistiqués doivent être utilisés afin de pouvoir distinguer le signal généré par l'émission des électrons du bruit des appareils électroniques. Le système de caractérisation 1 permet donc de monitorer des faisceaux ayant des intensités comprises entre 100 fA et 1 μA.

De manière particulièrement avantageuse, ledit motif 20 est formé d'une pluralité de segments conducteurs 24 isolés électriquement les uns des autres, notamment en étant positionnés à distance les uns des autres, à la surface du substrat. Le substrat 10 est préférentiellement isolant électriquement afin d'assurer qu'il n'y a pas de conduction entre les segments 24.

Préférentiellement, chacun desdits segments 24 est relié à une voie électronique 26. Il y a donc autant de voies électroniques 26 que de segments 24. Ainsi, les électrons $e_r^-$, i.e. les électrons récupérés suite à l'émission des électrons secondaires $e_s^-$, peuvent être mesurés indépendamment pour chaque segment 24. Avantageusement, chaque segment 24 possède donc un signal propre caractéristique du nombre de particules ayant traversé ledit segment.

Préférentiellement, les segments 24 sont situés côte-à-côte. En d'autres termes, lesdits segments 24 sont adjacents de manière à permettre un échantillonnage spatial du faisceau F. L'échantillonnage du faisceau F permet de déterminer les caractéristiques dudit faisceau, notamment sa position, son profil et son intensité, en fonction de la forme et la disposition relative des segments les uns par rapport aux autres.

Comme cela est illustré sur la figure 6a, pour échantillonner le faisceau F selon un axe donné, les segments 24 peuvent être orientés selon une même direction, de même largeur et équidistants.

Plus précisément, les segments 24 sont positionnés côte-à-côte suivant dans une direction horizontale, ce qui permet de mesurer un faisceau F selon l'axe X et/ou mobile se déplaçant selon l'axe X (le faisceau F traverse le motif 20 selon le plan Z perpendiculaire à la figure 6a). Il s'agit d'un exemple non limitatif et les segments 24 peuvent être positionnés dans une direction verticale, selon l'axe Y, ou tout autre direction.

À la figure 6b, par exemple, les segments 24 sont de largeurs différentes (de l'ordre de 1 à plusieurs mm). Plus précisément, les segments 24 situés au centre du motif 20 sont de largeur plus réduite que les segments 24 situés sur les bords du motif 20. Une telle configuration permet de mesurer le coeur du faisceau F avec une plus grande précision que la queue du faisceau F et une plus grande sensibilité pour la queue du faisceau que le coeur, i.e. la bordure latérale du faisceau en comparaison de son centre.

En variante, les segments 24 peuvent être découpés en secteurs angulaires, de manière à mesurer le non-centrage et/ou la distribution angulaire du faisceau F. En variante encore, les segments 24 peuvent être découpés en secteurs concentriques, de manière à mesurer le non-centrage et/ou et la distribution radiale du faisceau F.

À la figure 6c, on peut voir une combinaison des deux exemples ci-avant cités. Les segments 24 sont découpés en secteurs angulaires au centre du motif 20 et concentriques à mesure qu'ils sont éloignés dudit centre. Un tel agencement permet avantageusement de réaliser une imagerie du faisceau F avec une seule électrode émettrice 2.

Dans le cas contraire, il est nécessaire d'avoir recours à deux électrodes émettrices 2 contenant chacune un motif 20 complémentaire de l'autre motif 20. À titre d'exemple, une première électrode 2 serait dédiée à la mesure de la distribution angulaire du faisceau F tandis que l'autre électrode 2 serait dédiée à la mesure de sa distribution radiale, permettant de reconstruire le profil du faisceau F. Ce mode de réalisation à deux électrodes est plus précisément décrit dans la suite.

Incidemment, comme le nombre d'électrodes 2 requis pour obtenir l'imagerie du faisceau est réduit dans l'exemple de la figure 6c, la quantité de matière traversée est plus faible. Un motif 20 présentant un tel agencement de segments 24 est donc particulièrement adapté à la mesure de faisceaux de faible énergie qui, pour rappel, ne répondent aux critères de faible perturbation et de faible dispersion du faisceau que pour des épaisseurs de matière traversée très faibles. Cependant, l'invention n'est pas limitée à un tel agencement et tout autre agencement permettant de répondre à des besoins plus spécifiques peut être envisagé.

En référence à la figure 7, le système comprend en outre une électrode collectrice 3 sensiblement plane séparée de l'électrode émettrice 2.

Plus spécifiquement, ladite électrode collectrice 3 comprend une couche de matériau 30 apte à être portée à un potentiel positif, de sorte qu'une différence de potentiel existe entre ladite électrode 3 et l'électrode émettrice 2. En effet, l'électrode collectrice 3 permet de collecter tout ou une partie des électrons secondaires $e_s^-$ émis par l'électrode émettrice 2 (le déplacement des électrons est illustré par des flèches sur la figure 7). En d'autres termes, l'électrode collectrice 3 assure le bouclage du courant induit et forme donc un circuit fermé avec l'électrode émettrice 2.

Préférentiellement, aux fins du bouclage du courant induit, la couche de matériau 30 est électriquement conductrice, de sorte qu'une surface 32 de ladite couche 30 soit apte à collecter les électrons secondaires $e_s^-$ incidents. Ladite couche de matériau 30 peut être faite d'un métal ou de tout alliage de matériau lui permettant d'être suffisamment conducteur. À l'instar de l'électrode émettrice 2, l'électrode collectrice 3 peut comprendre un substrat 12 assurant le support mécanique de la couche 30.

Il n'est pas nécessaire que l'électrode collectrice 3 comprenne un motif, c'est-à-dire que la couche de matériau 30 forme un motif, comme le motif 20 de l'électrode émettrice 2. La couche de matériau 30 peut donc recouvrir la totalité de la surface de l'électrode collectrice 3. En effet, l'électrode collectrice n'a pas pour rôle d'imager la position avec laquelle les électrons secondaires $e_s^-$ quittent la surface de l'électrode émettrice 2, puisque cette fonction est accomplie par le motif de l'invention. Comme mentionné ci-avant, l'électrode collectrice a pour rôle de permettre le bouclage du courant induit et donc de former un circuit fermé avec l'électrode émettrice 2.

De manière avantageuse, l'électrode collectrice 3 peut être placée en vis-à-vis de l'électrode émettrice 2, de manière à faciliter la collecte des électrons secondaires. En effet, lorsqu'ils quittent la surface de l'électrode émettrice 2, les électrons $e_s^-$ sont émis de manière essentiellement isotrope. Ainsi, lorsque lesdites électrodes 2 et 3 sont placées en vis-à-vis l'une de l'autre, la collecte desdits électrons est favorisée.

En raison de leur émission globalement isotrope depuis la surface 22, il est possible que certains des électrons secondaires $e_s^-$ arrivent à une position bien différente sur la surface 32 de l'électrode collectrice 3.

Incidemment, dans une telle configuration, la plus grande face de l'électrode collectrice 3 étant traversée sensiblement perpendiculairement par l'axe de propagation du faisceau F, il est préférable que l'épaisseur de ladite électrode 3 et l'épaisseur de l'électrode émettrice 2, prises en combinaison, n'excèdent pas 15 μm WET, par exemple. En effet, il s'agit d'un prérequis pour que le système de caractérisation 1 satisfasse aux critères de faible perturbation du faisceau F (fraction d'énergie transmise, par exemple, supérieure à 0,95) et de faible dispersion du faisceau F (largeur du faisceau à 2 m inférieure à 1 mm). En d'autres termes, selon cet objectif, la somme des épaisseurs de matière traversée, c'est-à-dire le substrat 10 et le motif 20, ainsi que le substrat 12 et la couche de matériau 30, doit être par exemple inférieure à 15 μm WET pour un faisceau de protonthérapie.

L'invention n'est cependant pas limitée à une telle configuration et l'électrode collectrice 3 peut être située hors de l'axe de propagation du faisceau F. Dans ce troisième mode de réalisation de l'invention (illustré sur les figures 8a et 8b), l'électrode collectrice 3 n'est pas interceptive et n'est pas soumise aux contraintes de minceur. L'électrode collectrice 3 peut dans cette configuration être formée soit d'un empilement comprenant le substrat 12 et le matériau conducteur 30 ou avantageusement d'un simple matériau conducteur, par exemple une plaque métallique. La seule contrainte réside dans la nécessité de pouvoir installer le système de caractérisation 1 au sein de la ligne de propagation du faisceau F. Par exemple, à la figure 8a, l'électrode collectrice 3 est disjointe en deux électrodes collectrices en vis-à-vis l'une de l'autre, tandis qu'à la figure 8b, l'électrode collectrice 3 est continue et de forme cylindrique autour d'un motif 20 circulaire.

Alternativement, pour maximiser le taux de collecte des électrons secondaires $e_s^-$ par l'électrode collectrice 3 et minimiser l'effet de dispersion desdits électrons $e_s^-$, il est également possible d'augmenter le potentiel appliqué à ladite électrode collectrice 3. En effet, en augmentant le potentiel de l'électrode collectrice 3, on augmente la différence de potentiel entre ladite électrode 3 et l'électrode émettrice 2, et par conséquent l'attraction des électrons secondaires vers la surface 32.

En effet, le système de caractérisation 1 peut avantageusement comprendre un moyen de mesure 4 permettant de mesurer la quantité d'électrons secondaires $e_s^-$ émis depuis la surface de l'électrode émettrice 2. Autrement dit, le moyen de mesure 4 permet de « lire » le signal d'électrons secondaires $e_s^-$ émis depuis la surface de l'électrode émettrice 2. Le moyen de mesure permet d'effectuer une mesure du côté de l'émission, c'est-à-dire qu'il permet de mesurer le signal qui quitte l'électrode émettrice 2. La mesure du côté de l'émission est avantageuse.

En effet, d'une part, les segments 24 étant isolés électriquement les uns des autres, la mesure du côté de l'émission permet de mesurer indépendamment le signal d'électrons secondaires $e_s^-$ émis depuis chacun desdits segments conducteurs 24 individuellement afin d'échantillonner le faisceau F de particules chargées.

En effet, d'autre part, comme cela a été mentionné précédemment, le courant collecté par l'électrode collectrice 3 est soumis à des fluctuations suivant la position relative de ladite électrode 3 par rapport à l'électrode émettrice 2, le potentiel appliqué à ladite électrode collectrice 3 ou l'influence de champs électriques et/ou magnétiques résiduels. Ainsi, la mesure du signal du côté de l'émission permet de s'affranchir des influences des équipements de la ligne de faisceaux ainsi que du devenir des électrons émis.

La figure 9c illustre schématiquement un circuit électrique de connexion entre les segments 24 et le moyen de mesure 4. Comme mentionné précédemment, chaque segment 24 est relié à une voie électronique 26. De préférence, cette voie électronique débouche sur un moyen d'interfaçage qui permet de relier les voies électroniques 26 des segments 24 au moyen de mesure 4. Le moyen de mesure 4 est adapté pour mesurer un courant de faible intensité, ce qui lui permet de mesurer la quantité d'électrons secondaires $e_s^-$ émis depuis la surface de l'électrode émettrice 2. Par exemple, le moyen de mesure 4 peut consister en un système électronique bas bruit. Le circuit électrique est configuré pour permettre une mesure du courant segment par segment.

En outre, l'utilisation d'une électrode collectrice 3 est optionnelle. En effet, en l'absence d'une électrode collectrice 3, les électrons secondaires $e_s^-$ émis peuvent être laissés à l'environnement du système de caractérisation 1. Dans ce cas, les électrons $e_s^-$ sont absorbés par les matériaux environnant ledit système 1. Ce mode de fonctionnement est illustré sur les figures 5a, 5b et 5c. L'électrode émettrice 2 se suffit donc à elle-même.

La figure 9a illustre de manière schématique un système de caractérisation 1 selon un quatrième mode de réalisation de l'invention. Dans ce mode de réalisation, le système de caractérisation 1 comprend une pluralité, c'est-à-dire au moins deux, électrodes émettrices 2 et une électrode collectrice 3.

L'utilisation de plusieurs électrodes émettrices 2 permet, comme cela a été vu précédemment, d'obtenir des mesures complémentaires si un unique motif 20 ne permet pas d'obtenir toutes les informations nécessaires. Cela permet également de d'obtenir des mesures redondantes ou autrement d'affiner des mesures. Dans l'exemple illustré sur la figure 9a, une première électrode émettrice 2 est dédiée à la mesure du profil du faisceau F selon l'axe X, tandis que l'autre électrode 2 permet de mesurer le profil du faisceau F selon l'axe Y.

Par ailleurs, comme illustré également sur la figure 9a, l'électrode collectrice 3 peut également comprendre une deuxième surface 32 opposée à la première surface 32. Dans une telle configuration, l'électrode collectrice 3 est positionnée entre deux électrodes émettrices 2, de sorte qu'elle soit en mesure de collecter les électrons secondaires $e_s^-$ émis par les deux électrodes émettrices 2. Dans une telle configuration, l'émission se fait vers l'arrière pour l'électrode émettrice 2 visible en haut de la figure 9a, tandis que l'émission se fait vers l'avant pour l'électrode émettrice 2 visible en bas dans la figure 9a.

Cependant, l'invention n'est pas limitée à cette illustration.

Le système de caractérisation 1 peut également comprendre une pluralité d'électrodes collectrices 3 dédiés à la collection des électrons secondaires émis par plusieurs électrodes émettrices 2. Il est possible mais non nécessaire que le nombre d'électrodes collectrices soit égal au nombre d'électrodes émettrices.

On dispose, dans le cas de la figure 9b, d'une première électrode collectrice 3 dédiée à la collecte des électrons secondaires émis par une première électrode émettrice 2 (visibles en haut sur la fig. 9b), et d'une deuxième électrode collectrice 3 dédiée à la collecte des électrons secondaires depuis une deuxième électrode émettrice 2. Dans cette configuration, l'émission se fait vers l'avant pour l'électrode émettrice 2 et l'électrode collectrice 3 visibles en haut de la figure 9b, tandis que l'émission se fait vers l'arrière pour l'électrode émettrice 2 et l'électrode collectrice 3 visibles en bas dans la figure 9a.

En outre, comme il peut être également vu sur la figure 9b, dans sa direction de propagation, le faisceau F ne traverse pas nécessairement le substrat 10 de ladite électrode puis le motif 20. Autrement dit, le faisceau F peut également traverser le motif 20 puis le substrat 10.

Cependant, l'invention n'est pas limitée à cette illustration

Par exemple, le système 1 peut comprendre trois électrodes émettrices 2 comprenant un décalage angulaire de 120° entre les segments 24 de la première et la deuxième électrode 2 ainsi qu'entre les segments 24 de la deuxième électrode et la troisième électrode 2, de sorte que le faisceau F puisse être échantillonné selon des redondants et que la précision en soit améliorée.

Alternativement, le système de caractérisation 1 peut être mobile, de manière à effectuer des mouvements de translation et/ou de rotation. À cet effet, un moyen d'asservissement mécanique peut être prévu pour guider le système 1. Une telle configuration permet de réduire le nombre d'électrodes émettrices 2, puisque c'est le pas de translation et/ou de rotation du système de caractérisation 1 qui est utilisé pour réaliser l'échantillonnage.

L'invention concerne également une machine de production d'un faisceau de particules chargées comprenant un système 1 tel que décrit précédemment, ledit système étant fixe et à demeure dans la ligne de propagation du faisceau F.

Par exemple, ladite machine peut être un dispositif d'hadronthérapie ou protonthérapie, un accélérateur de particules, une machine pour la production d'isotopes radiopharmaceutiques.

Ladite machine peut comprendre des systèmes de profilage de faisceau en amont et en aval d'un modulateur de profondeur, l'ensemble étant disposé dans un tube à vide d'un faisceau de protons. Afin de contrôler la trajectoire du faisceau F, et notamment canaliser les particules provenant dudit faisceau, un ou plusieurs aimants peuvent être placés à proximité dudit faisceau. Ces aimants sont à l'origine d'un champ magnétique permettant de diriger les particules vers une zone à irradier ou à traiter. Ils ne jouent pas de rôle dans le fonctionnement du système de caractérisation du faisceau F.

Plus généralement, le système de caractérisation 1 peut être installé et/ou utilisée dans tout équipement pour lequel il est utile de monitorer un faisceau de particules chargées.

**Exemples de réalisation**

Un système de caractérisation 1 d'un faisceau de particules chargées a été étudié.

Il comprend une électrode émettrice 2 composée d'un substrat 10 en PEEK de 6 $\mu$m d'épaisseur sur lequel a été déposé motif 20 de 50 nm d'or. Le motif 20 comprend une pluralité de segments 24 situés côte-à-côte selon l'axe X, ayant une largeur de 1,6 mm et séparés par une distance de 0,35 mm les uns des autres. Ce système comprend également une électrode collectrice 3 comprenant un substrat 12 de Kapton ® de 8 $\mu$m supportant une couche d'or 30 de 50 nm d'épaisseur.

Ce système de caractérisation a été installé dans une enceinte à vide située à environ 1 m en aval en sortie de la ligne d'un faisceau de protons du cyclotron ARRONAX. L'enceinte à vide est soutenue par une table de translation qui permet de déplacer lesdits systèmes dans le faisceau F. L'installation comprend également un système de lecture des signaux équipé d'un pico-ampèremètre et un système d'acquisition simplifié.

Par ailleurs, l'enceinte à vide a été équipée de deux types de fenêtres d'entrée du faisceau. Ainsi, lors de la première série de mesure une fenêtre en Saphir de 2 mm a été utilisée (figures 11a à 11c). Ce type de fenêtres atténue l'énergie du faisceau, de sorte qu'après leur traversée, les protons de 68 MeV délivrés par la machine ont une énergie de 60 MeV sur le détecteur, soit une atténuation de 11,7%.

En revanche, lors de la deuxième série de mesures une fenêtre en Kapton de 230 $\mu$m a été utilisée. Ces fenêtres atténuent moins le faisceau, même si une perturbation subsiste. À titre d'exemple un faisceau de 68 MeV perd 2 MeV d'énergie après son passage à travers la fenêtre et un faisceau de 30 MeV perd 2,2 MeV d'énergie (atténuation de 2,9% et 7,3%).

Mesures du taux d'électrons secondaires sous faisceau de protons

La figure 10a montre les variations du taux d'électrons secondaires mesurées pour des faisceaux F de 27,8 MeV (Test B, cercle plein), de 60 MeV (Test A, losange plein), 66 MeV (Test B, cercle plein). Les mesures expérimentales réalisées durant cette étude sont comparées aux résultats obtenus dans l'art antérieur.

L'essentiel des mesures précédemment réalisées concernent des faisceaux de particules chargées ayant de faibles ou de très faibles énergies (< 20 MeV). À ces énergies, de nombreuses expériences ont été réalisées afin d'étudier les matériaux émetteurs aux énergies accessibles à l'époque.

Aux trois énergies testées dans cette étude, le taux d'électrons secondaires est proche de celui attendu, puisque les mesures effectuées se superposent aux prédictions effectuées par Rotthard *et a*l. De plus, ce taux d'émission est largement suffisant pour générer un signal exploitable, même pour des faisceaux d'intensité très faible.

Il est intéressant de préciser que le taux d'électrons secondaires varie comme la perte d'énergie électronique par unité de longueur de la particule projectile (relation de Bethe-Bloch). Or, cette dernière quantité décroit avec l'énergie du projectile qui augmente jusqu'à un minimum (appelé minimum d'ionisation, autour de 2 GeV/c pour des protons par exemple) puis recroit ensuite lentement tout en restant inférieur à la perte à basse énergie sur une large plage. Donc à énergie cinétique élevée, la particule induira une moindre émission d'électrons secondaires. Notons cependant que ce phénomène est compensé aux hautes énergies par le fait que les faisceaux très énergétiques sont développés à de hautes intensités et donc induisent avantageusement plus d'électrons secondaires émis.

La figure 10b illustre l'évolution du taux d'électrons secondaires (en courant mesuré) lorsque l'intensité du faisceau varie entre $10^{-1}$ pA et $10^4$ pA pour des faisceaux F de 27,8 MeV (Test B, carré), de 60 MeV (Test A, losange), 66 MeV (Test B, cercle).

Le taux d'électrons secondaires évolue de manière constante en fonction de l'intensité du faisceau, illustrant la linéarité du phénomène d'émission d'électrons secondaires. Ainsi, le système de caractérisation 1 est apte à monitorer précisément le profil du faisceau de par l'absence de distorsion de réponse du moniteur entre les portions intenses et faibles du faisceau. Par ailleurs, cela est particulièrement avantageux pour le traitement de zones tumorales par protonthérapie, où l'application d'une surdose latérale pourrait endommager irréversiblement des tissus sains et affecter la santé du patient.

De plus, la figure 10b montre que le système de caractérisation 1 permet, comme prévu, de mesurer le taux d'électrons secondaires pour des faisceaux d'intensité très faible, i.e. jusqu'à $2 \cdot 10^{-1}$ pA pour la mesure réalisée avec le faisceau de 60 MeV, et des faisceaux d'intensité très élevée, jusqu'à $10^4$ pA pour la mesure réalisée avec le faisceau de 66 MeV. Toutes les intensités intermédiaires sont bien évidemment accessibles.

Mesure du profil et de la position d'un faisceau de protons

Les figures 11a à 11c illustrent l'évolution du courant mesuré en fonction de la position des segments 24. Les protons ont une énergie de 60 MeV et l'intensité du faisceau est respectivement de 200 fA, 1 pA et 1 nA. Les trois profils illustrés correspondent aux points en forme de losange représentés sur la figure 10b.

Comme illustré sur ces figures, le profil du faisceau F peut être reconstruit en fonction du signal mesuré par des segments 24 d'intérêt. Il n'est en effet pas nécessaire de mesurer le signal pour chaque segment 24 afin d'obtenir un profil puisque le profil peut être ajusté à partir de quelques points. Cependant, plus on augmente le nombre de segments 24 et plus la résolution du profil est importante. Le signal mesuré par segment 24 augmente avec l'intensité du faisceau. Si l'on analyse le segment 24 situé à 15 mm, l'intensité est de 5 fA à 200 fA, 0,07 pA à 1 pA et de 24 pA à 1 nA.

Plus précisément, comme on peut le voir sur la figure 11a, l'incertitude sur la mesure reste assez élevée pour le faisceau de très faible intensité (200 fA). Comme cela a été précisé avant, pour des intensités très faibles, le bruit de l'électronique de mesure reste un facteur limitant pour le système de caractérisation 1. De plus, comme cela peut être observé, même si le courant mesuré par segment 24 (jusqu'à 5 fA) reste faible à 200 fA, le profil du faisceau peut être reconstruit et la position du faisceau peut être estimée avec une erreur relativement faible (16,99 $\pm$ 0,4 mm).

Pour les faisceaux de 1 pA (figure 11b) et 1 nA (figure 11c), l'incertitude sur la mesure est moins importante et le profil et la position du faisceau peuvent être déterminés avec une meilleure précision. Par ailleurs, la position et le profil du faisceau peuvent être déterminés en modifiant la position du système de caractérisation 1 (au moyen de la table de translation soutenant l'enceinte à vide) et en effectuant un suivi des variations de courant sur un même segment 24.

De plus, comme il peut être vu sur les figures 11a à 11c, il est également possible de donner une « mesure » de la taille du faisceau F, à partir du paramètre $\sigma$. En effet, ce paramètre $\sigma$, globalement compris entre 3 et 3,5 mm avec une erreur de 0,6 mm à 200 fA, 0,28 mm à 1 pA et 0,06 mm à 1 nA, représente précisément un sixième de la taille réel du faisceau. En d'autres termes, si sigma est égal à 3,37 mm, la taille du faisceau est égale à 20,22 mm. Un tel exemple, est par ailleurs donné à la fig. 11c.Le système 1 selon l'invention permet donc d'évaluer le profil d'un faisceau sur une grande gamme dynamique, c'est-à-dire pour des faisceaux dont l'intensité peut varier entre quelques centaines de fA à 1 nA.

**Revendications**

**1.** Système de caractérisation (1) d'un faisceau (F) de particules chargées, le système comprenant un empilement, ledit empilement comprenant :

- un motif (20) ultramince formé d'un matériau électriquement conducteur ;
- un substrat (10) mince portant le ledit motif ;

l'empilement formant une électrode émettrice (2), ladite électrode émettrice étant apte à émettre des électrons secondaires ( $e_s^-$ ) à proximité d'une surface (22) dudit motif lorsque ladite électrode émettrice est traversée par le faisceau de particules chargées, le système de caractérisation ayant une épaisseur inférieure à 15 $\mu$m équivalent-eau.

**2.** Système de caractérisation (1) selon la revendication 1, dans lequel l'empilement comprend en outre au moins une couche d'accroche (28) interposée entre le motif (20) et le substrat (10) de manière à faciliter l'adhésion dudit motif sur le substrat.

**3.** Système de caractérisation (1) selon la revendication 1 ou 2, dans lequel le substrat (10) est formé d'un matériau thermostable tel qu'un polymère et/ou une céramique.

**4.** Système de caractérisation (1) selon la revendication 1, dans lequel le substrat (10) est formé d'un polyimide et/ou d'une polyetherethercétone ou de PET (Polytéréphtalate d'éthylène).

**5.** Système de caractérisation (1) selon l'une quelconque des revendications précédentes, dans lequel l'épaisseur du motif (20) est comprise entre 10 nm et 100 nm.

**6.** Système de caractérisation (1) selon l'une quelconque des revendications précédentes, dans lequel ledit substrat (10) est isolant électriquement et ledit motif (20) est formé d'une pluralité de segments conducteurs (24) isolés électriquement les uns des autres.

**7.** Système de caractérisation (1) selon la revendication 6, dans lequel lesdits segments (24) sont faits d'un matériau inoxydable, préférentiellement d'or.

**8.** Système de caractérisation (1) selon les revendications 6 à 7, dans lequel lesdits segments (24) sont situés côte à côte dans un plan destiné à s'étendre sensiblement perpendiculairement à la direction de propagation du faisceau.

**9.** Système de caractérisation (1) selon la revendication 8, dans lequel lesdits segments (24) sont orientés dans une même direction, de même largeur et équidistants, de manière à échantillonner le faisceau (F) selon un axe donné.

10. Système de caractérisation (1) selon les revendications 8, dans lequel lesdits segments (24) sont découpés en secteurs angulaires, de manière à mesurer le non-centrage et/ou la distribution angulaire du faisceau (F).

11. Système de caractérisation (1) selon les revendications 8, dans lequel lesdits segments (24) sont découpés en secteurs concentriques, de manière à mesurer le non-centrage et/ou et la distribution radiale du faisceau (F).

12. Système de caractérisation (1) selon les revendications 8, dans lequel lesdits segments (24) sont découpés en secteurs angulaires et concentriques de manière à réaliser une imagerie du faisceau (F).

13. Système de caractérisation (1) selon l'une quelconque des revendications 1 à 12, comprenant en outre une électrode collectrice (3), ladite électrode collectrice étant soumise à un potentiel positif, ledit potentiel étant supérieur au potentiel de l'électrode émettrice (2), de manière à collecter les électrons secondaires ( $e_s^-$ ) émis par ladite électrode émettrice.

14. Système de caractérisation (1) selon l'une quelconque des revendications précédentes, comprenant un moyen de mesure (4), ledit moyen permettant de mesurer la quantité d'électrons secondaires ( $e_s^-$ ) émis depuis la surface de l'électrode émettrice (2).

15. Machine de production d'un faisceau de particules chargées comprenant un système (1) selon l'une quelconque des revendications 1 à 14, ledit système étant fixe et à demeure.

16. Utilisation d'un système de caractérisation (1) tel que décrit dans les revendications 1 à 14 pour caractériser un faisceau de particules chargées d'un équipement de traitement des tumeurs cancéreuses.

**Patentansprüche**

1. System zur Charakterisierung (1) eines Strahls (F) geladener Teilchen, wobei das System eine Stapelung umfasst, wobei die Stapelung umfasst:

    - ein Ultradünn-Motiv (20), welches aus einem elektrisch leitfähigen Werkstoff gebildet ist;
    - ein dünnes Substrat (10), welches das Motiv trägt;

wobei die Stapelung eine Emitterelektrode (2) bildet, wobei die Emitterelektrode imstande ist, Sekundärelektronen ( $e_s^-$ ) in der Nähe einer Oberfläche (22) des Motivs zu emittieren, wenn die Emitterelektrode von dem Strahl geladener Teilchen durchquert wird, wobei das System zur Charakterisierung eine Dicke von weniger als 15 μm Wasseräquivalent aufweist.

2. System zur Charakterisierung (1) nach Anspruch 1, wobei die Stapelung weiter mindestens eine Haftschicht (28) umfasst, die zwischen dem Motiv (20) und dem Substrat (10) eingesetzt ist, um die Haftfähigkeit des Motivs am Substrat zu erleichtern.

3. System zur Charakterisierung (1) nach Anspruch 1 oder 2, wobei das Substrat (10) aus einem thermostabilen Werkstoff, wie einem Polymer und/oder Keramik gebildet ist.

4. System zur Charakterisierung (1) nach Anspruch 1, wobei das Substrat (10) aus einem Polyimid und/oder einem Polyetheretherketon oder aus PET (Polyethylenterephthalat) gebildet ist.

5. System zur Charakterisierung (1) nach einem der vorstehenden Ansprüche, wobei die Dicke des Motivs (20) zwischen 10 nm und 100 nm liegt.

6. System zur Charakterisierung (1) nach einem der vorstehenden Ansprüche, wobei das Substrat (10) elektrisch isolierend ist, und das Motiv (20) aus einer Vielzahl von leitfähigen Segmenten (24) gebildet ist, die elektrisch voneinander isoliert sind.

7. System zur Charakterisierung (1) nach Anspruch 6, wobei die Segmente (24) aus einem nichtrostenden Werkstoff, vorzugsweise aus Gold gefertigt sind.

8. System zur Charakterisierung (1) nach den Ansprüchen 6 bis 7, wobei sich die Segmente (24) nebeneinander in einer Ebene befinden, die dazu bestimmt ist, sich im Wesentlichen senkrecht zur Ausbreitungsrichtung des Strahls zu erstrecken.

9. System zur Charakterisierung (1) nach Anspruch 8, wobei die Segmente (24) in einer selben Richtung, mit gleicher Breite und im gleichen Abstand ausgerichtet sind, um den Strahl (F) entlang einer gegebenen Achse abzutasten.

10. System zur Charakterisierung (1) nach Anspruch 8, wobei die Segmente (24) in Winkelsektoren zugeschnitten sind, um die Nicht-Zentrierung und/oder die Winkelverteilung des Strahls (F) zu messen.

11. System zur Charakterisierung (1) nach Anspruch 8, wobei die Segmente (24) in konzentrische Sektoren zugeschnitten sind, um die Nicht-Zentrierung und/oder die radiale Verteilung des Strahls (F) zu messen.

12. System zur Charakterisierung (1) nach Anspruch 8, wobei die Segmente (24) in Winkel- und konzentrische Sektoren zugeschnitten sind, um eine Bildgebung des Strahls (F) zu realisieren.

13. System zur Charakterisierung (1) nach einem der Ansprüche 1 bis 12, weiter eine Sammelekektrode (3) umfassend, wobei die Sammelelektrode einem positiven Potenzial unterzogen wird, wobei das Potenzial größer als das Potenzial der Emitterelektrode (2) ist, um die Sekundärelektronen ( $e_s^-$ ) zu sammeln, die von der Emitterelektrode emittiert werden.

14. System zur Charakterisierung (1) nach einem der vorstehenden Ansprüche, ein Messmittel (4) umfassend, wobei das Mittel ermöglicht, die Menge an Sekundärelektronen ( $e_s^-$ ) zu messen, die aus der Oberfläche der Emitterelektrode (2) emittiert werden.

15. Maschine zum Herstellen eines Strahls geladener Teilchen, die ein System (1) nach einem der Ansprüche 1 bis 14 umfasst, wobei das System fest und dauerhaft ist.

16. Verwendung eines Systems zur Charakterisierung (1) nach den Ansprüchen 1 bis 14 zur Charakterisierung eines Strahls geladener Teilchen einer Ausrüstung zum Behandeln von Krebsgeschwüren.

**Claims**

1. System for characterising (1) a beam (F) of charged particles, the system comprising a stack, said stack comprising:

     - an ultra-thin pattern (20) formed from an electrically conductive material;
     - a thin substrate (10) carrying said pattern;

   the stack forming an emitting electrode (2), said emitting electrode being capable of emitting secondary electrons ($e_s^-$) in the proximity of a surface (22) of said pattern when said emitting electrode is passed through by the beam of charged particles.

2. Characterisation system (1) according to claim 1, wherein the stack further comprises at least one bonding layer (28) interposed between the pattern (20) and the substrate (10) so as to facilitate the adhesion of said pattern on the substrate.

3. Characterisation system (1) according to claim 1 or 2, wherein the substrate (10) is formed from a thermostable material such as a polymer and/or a ceramic.

4. Characterisation system (1) according to claim 1, wherein the substrate (10) is formed from a polyimide and/or a polyetheretherketone or PET (poly(ethylene) terephthalate).

5. Characterisation system (1) according to any one of the preceding claims, wherein the thickness of the pattern (20) is between 10nm and 100nm.

6. Characterisation system (1) according to any one of the preceding claims, wherein said substrate (10) is electrically insulating and said pattern (20) is formed from a plurality of conductive segments (24) electrically insulated from one another.

7. Characterisation system (1) according to claim 6, wherein said segments (24) are made of a rustproof material, preferably gold.

8. Characterisation system (1) according to claims 6 to 7, wherein said segments (24) are situated side-by-side in a plane intended to extend substantially perpendicularly to the direction of propagation of the beam.

9. Characterisation system (1) according to claim 8, wherein said segments (24) are oriented in the same direction, of the same width and equidistant, so as to sample the beam (F) along a given axis.

10. Characterisation system (1) according to claim 8, wherein said segments (24) are cut into angular sectors, so as to measure the non-centring and/or the angular distribution of the beam (F).

11. Characterisation system (1) according to claim 8, wherein said segments (24) are cut into concentric sectors, so as to measure the non-centring and/or the radial distribution of the beam (F).

12. Characterisation system (1) according to claim 8, wherein said segments (24) are cut into angular and concentric sectors so as to carry out an imaging of the beam (F).

13. Characterisation system (1) according to any one of claims 1 to 12, further comprising a collecting electrode (3), said collecting electrode being subjected to a positive potential, said potential being greater than the potential of the emitting electrode (2), so as to collect the secondary electrons ($e_s^-$) emitted by said emitting electrode.

**14.** Characterisation system (1) according to any one of the preceding claims, comprising a measuring means (4), said means making it possible to measure the quantity of secondary electrons ($e_s^-$) emitted from the surface of the emitting electrode (2).

**15.** Machine for producing a beam of charged particles comprising a system (1) according to any one of claims 1 to 14, said system being fixed and permanent.

**16.** Use of a characterisation system (1) such as described in claims 1 to 14 for characterising a beam of charged particles of an item of equipment for treating cancerous tumours.

*Fig.1c*

*Fig.1b*

*Fig.1a*

Ekin ( MeV/u )

*Fig.2c*

*Fig.2b*

*Fig.2a*

Ekin ( MeV/u )

Fig.3c

Fig.3b

Fig.3a

Ekin ( MeV/u )

Fig.4c

Fig.4b

Fig.4a

Ekin ( MeV/u )

*Fig.5a*

*Fig.5b*

Fig.5c

Fig.6a

24

20

Fig.6b

24

20

Fig.6c

24

20

*Fig.7*

*Fig.8a*

*Fig.8b*

*Fig.9a*

*Fig.9b*

*Fig.9c*

Moyen de mesure

Moyen d'interfaçage

26

20

24

F

2

*Fig.10a*

*Fig.10b*

*Fig.11a*

*Fig.11b*

Position = 16.27 ± 0.24mm
Sigma = 3.37 ± 0.28mm

*Fig.11c*

Diamètre (± 3σ) = 23.29 ± 0.35mm
Intégrale = 128.4 ± 21.15 pA

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140265823 A
- US 7515681 B2
- US 3450879 A

**Littérature non-brevet citée dans la description**

- **SHAPIRA et al.** *Nuclear instrument and Methods in Physics Research,* vol. 454 (409-420), 409-420, 200
- **VIGNET et al.** *Proceedings of IBIC2013,* ISBN 978-3-95450-127-4
- **BADANO et al.** Laboratory and In-Beam Tests of a Novel Real-Time Beam Monitor for Hadrontherapy. IEEE, 01 Août 2005, vol. 52, 4
- **KOPP et al.** Nuclear Instruments Methods in Physics Research Section A: Accelerator, Spectrometers. *Detector and Associated Equipment,* 2005, vol. 554 (1-3), 138-146
- Laboratory and In-Beam Tests of a Novel Real-Time Beam Monitor for Hadrontherapy. **ABBAS K et al.** IEEE TRANSACTIONS ON NUCLEAR SCIENCE. IEEE SERVICE CENTER, 01 Août 2005, vol. 52, 830-833
- **GARNIR et al.** *NIM,* 1982, vol. 202 (1-2), 187-192